# EUROPÄISCHE PATENTANMELDUNG

(11) **EP 4 336 142 A1**
(43) Veröffentlichungstag der Anmeldung: **13.03.2024**
(21) Anmeldenummer: 23187700.2
(22) Anmeldetag: 25.07.2023
(51) Int. Cl.: G01B 11/24, B23Q 17/00

(54) **VORRICHTUNG ZUM VERMESSEN EINES WERKZEUGS ODER EINES KOMPLETTWERKZEUGS UND VERFAHREN ZUM ERSTELLEN EINES DIGITALEN ABBILDS EINES WERKZEUGS ODER KOMPLETTWERKZEUGS**

(30) Priorität: 09.09.2022 DE 102022123017
(71) Anmelder: Franz Haimer Maschinenbau KG, 86568 Hollenbach-Igenhausen (DE)
(72) Erfinder: Haimer, Andreas, 86568 Hollenbach-Igenhausen (DE); Duhme, Kai, 33689 Bielefeld (DE)
(74) Vertreter: Schwarz, Wolfgang

(57) **Zusammenfassung**

Die Erfindung betrifft eine Vorrichtung zum Vermessen eines Werkzeugs, insbesondere eines Schneidwerkzeugs, oder eines Komplettwerkzeugs aus einer Werkzeugaufnahme und einem in der Werkzeugaufnahme eingespannten Werkzeug, insbesondere eines Schneidwerkzeugs, sowie ein Verfahren zum Erstellen eines digitalen Abbilds eines Werkzeugs, insbesondere eines Schneidwerkzeugs, oder Komplettwerkzeugs aus einer Werkzeugaufnahme und einem in der Werkzeugaufnahme eingespannten Werkzeug, insbesondere eines Schneidwerkzeugs, insbesondere unter Verwendung einer solchen Vorrichtung.

Bei dem Verfahren wird für die Erstellung des digitalen Abbildes das Werkzeug oder das Komplettwerkzeug abgetastet. Ferner wird zumindest ein erster Schneidenpunkt, insbesondere der erste Schneidenpunkt, beispielsweise ein Schneidenanfangspunkt, und ein zweiter Schneidenpunkt, beispielsweise ein Schneidenendpunkt, bei dem Werkzeug oder dem Komplettwerkzeug vermessen. In dem digitalen Abbild wird dann unter Verwendung des ersten und des zweiten Schneidenpunktes ein Schneidenbereich ermittelt wird ("kollisionsrelevanter digitaler Zwilling").

## Beschreibung

Die Erfindung betrifft eine Vorrichtung zum Vermessen eines Werkzeugs, insbesondere eines Schneidwerkzeugs, oder eines Komplettwerkzeugs aus einer Werkzeugaufnahme und einem in der Werkzeugaufnahme eingespannten Werkzeug, insbesondere eines Schneidwerkzeugs, sowie ein Verfahren zum Erstellen eines digitalen Abbilds eines Werkzeugs, insbesondere eines Schneidwerkzeugs, oder Komplettwerkzeugs aus einer Werkzeugaufnahme und einem in der Werkzeugaufnahme eingespannten Werkzeug, insbesondere eines Schneidwerkzeugs, insbesondere unter Verwendung einer solchen Vorrichtung.

Es ist üblich, ein Komplettwerkzeug aus einer Werkzeugaufnahme und einem in der Werkzeugaufnahme eingespannten, beispielsweise eingeschrumpften, Werkzeug, beispielsweise einem Schneidwerkzeug, vor der Kopplung mit einer, beispielsweise als CNC-Bearbeitungsmaschine ausgebildeten, Werkzeugmaschine mittels einer Vorrichtung zum Vermessen eines Werkzeugs, kurz auch nur "Voreinstellgerät" genannt, zu vermessen ("Voreinstellung", "Voreinstelldaten").

Die so mit dem Voreinstellgerät ermittelten Maße des Werkzeugs bzw. Komplettwerkzeugs werden dann zur Optimierung der Werkstückbearbeitung in der Werkzeugmaschine der Werkzeugmaschine zur Verfügung gestellt bzw. dort verwendet.

Durch die Voreinstellung wird insbesondere sichergestellt, dass ein Werkstück bearbeitende Teile des Werkzeugs, wie beispielsweise eine Schneidkante eines Schneidwerkzeugs, die für die geplante Bearbeitung des Werkstücks auf der Werkzeugmaschine akzeptablen Positionsmaße haben.

Mittels eines solchen Voreinstellgeräts werden dabei insbesondere die Länge des Komplettwerkzeugs, der Durchmesser und/oder die Schneidenform des eingespannten Werkzeugs bzw. Schneidwerkzeugs - und gegebenenfalls verschiedene weitere Abmessungen des bzw. bei dem Werkzeug bzw. Komplettwerkzeug gemessen.

Sind diese Daten unmittelbar für die Qualität der Werkstückbearbeitung des Werkstücks in der Werkzeugmaschine relevant, so hat die Werkzeugvermessung in dem Voreinstellgerät unter großer Genauigkeit zu erfolgen.

Eine solche Vermessungseinrichtung bzw. ein solches Voreinstellgerät ist beispielsweise durch das Voreinstellgerät der Baureihe "UNO" oder der Baureihe "VIO" der Fa. Haimer bekannt.

Darüber hinaus ist es auch bekannt, auch aus im Voreinstellgerät ermittelten Daten einen sogenannten digitalen Zwilling, vereinfacht ein digitales Abbild, des Werkzeugs oder Komplettwerkzeugs zu ermitteln, um diesen digitalen Zwilling zu einem präventiven Kollisionsschutz bei der Werkzeugmaschine zu verwenden.

Im Rahmen dieses präventiven Kollisionsschutzes wird insbesondere ein gesamter Bearbeitungsvorgang der Werkzeugmaschine - mit gekoppeltem Komplettwerkzeug - zumindest rechnerisch simuliert und geprüft, ob es zwischen dem Werkzeug bzw. dem Komplettwerkzeug und dem Werkstück bzw. den umliegenden Bauteilen (Maschinentisch, Spannvorrichtung etc.) zu Kollisionen kommt (Kollisionsbetrachtung, Kollisionssimulation).

Hier ist es auch bekannt, dass für den digitalen und den Kollisionsschutz bzw. für die Kollisionssimulation verwendeten Zwillinge jene sehr hohe Genauigkeit, die für die Werkzeugvoreinstellung benötigt wird, nicht notwendig ist.

Eine Ermittlung eines digitalen Zwillings eines Werkzeugs bzw. Komplettwerkzeugs ist beispielsweise in der EP 3 664 961 A1 beschrieben.

Es ist Aufgabe der Erfindung, die im Stand der Technik bekannten Voreinstellgeräte zu verbessern, insbesondere die Kollisionsprüfung mittels digitaler Abbilder von Werkzeugen oder Komplettwerkzeugen zu verbessern und/oder zu vereinfachen.

Diese Aufgabe wird gelöst durch eine Vorrichtung zum Vermessen eines Werkzeugs oder eines Komplettwerkzeugs aus einer Werkzeugaufnahme und einem in der Werkzeugaufnahme eingespannten Werkzeug sowie ein Verfahren zum Erstellen eines digitalen Abbilds eines Werkzeugs oder Komplettwerkzeugs aus einer Werkzeugaufnahme und einem in der Werkzeugaufnahme eingespannten Werkzeug, mit den Merkmalen des jeweiligen unabhängigen Anspruchs.

Vorteilhafte Weiterbildungen der Erfindung sind Gegenstand abhängiger Ansprüche sowie der nachfolgenden Beschreibung und beziehen sich sowohl auf die erfindungsgemäße Vorrichtung wie auch auf das erfindungsgemäße Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Bei dem **Verfahren** zum Erstellen eines digitalen Abbilds eines Werkzeugs oder Komplettwerkzeugs aus einer Werkzeugaufnahme und einem in der Werkzeugaufnahme eingespannten Werkzeug wird für die Erstellung des digitalen Abbildes das Werkzeug oder das Komplettwerkzeug abgetastet.

Zusätzlich zur Abtastung des Werkzeugs oder des Komplettwerkzeugs wird zumindest ein erster Schneidenpunkt, insbesondere der erste Schneidenpunkt, beispielsweise ein Schneidenanfangspunkt, und ein zweiter Schneidenpunkt, beispielsweise ein Schneidenendpunkt, bei dem Werkzeug oder dem Komplettwerkzeug vermessen.

Gegebenenfalls können auch mehrere Schneidenpunkte bzw. Schneidenbereiche (bei komplexeren Werkzeugen) vermessen werden bzw. angezeigt werden, was insbesondere bei Vorliegen von mehreren Schneidenbereichen - beispielsweise in unterschiedlichen Höhen- und/oder Dreh- bzw. Schneidenlagen - sinnvoll sein kann.

Die Vermessung eines Schneidenpunktes, d.h. nur des ersten Schneidenpunktes, kann insbesondere dann schon ausreichend sein, wenn Vorwissen über eine Geometrie einer Schneide vorliegt, beispielsweise dadurch, dass bekannt ist, dass sich die Schneide von einem bzw. dem ersten Schneidenpunkt bis an ein Ende des Werkzeugs erstreckt.

Die Vermessung des zumindest ersten Schneidenpunkts bzw. des ersten und des zweiten Schneidenpunkts kann - mittels einer Vermessungseinheit - automatisiert erfolgen, beispielsweise unter Verwendung einer in der Vermessungseinheit integrierten bzw. mit der Vermessungseinheit zusammenarbeitenden Bildverarbeitung, Taster, Laser oder anderem Messmittel und/oder mit einer künstlichen Intelligenz, die sich an Hand eines selbstlernenden Algorithmus optimiert, oder manuell, beispielsweise dadurch, dass ein Bediener entsprechende Punkte in einem diesbezüglichen Messprogramm bestimmt.

Vermessen mag auch mitumfassen, dass bereits vermessene Schneidenpunkte dann bei dem Verfahren verwendet werden. Ferner mag Vermessen auch bedeuten, dass Punkte in durch Vermessen erhaltenen, graphischen Datensätzen gezielt ausgewählt und als Schneidenpunkte festgelegt werden.

Für die Vermessung mag es auch zweckmäßig sein, dass Vorwissen, insbesondere bzw. beispielsweise in Form von Vorschlägen, für den zu vermessenden zumindest ersten Schneidenpunkt bzw. ersten und zweiten Schneidenpunkt zur Verfügung gestellt werden, beispielsweise durch entsprechende Daten bzw. Datensätze und/oder aus einer Datenbank oder einem Programmiersystem, der bzw. die dann gegebenenfalls an Hand eines Soll- /Ist-Vergleichs durch das Vermessen adjustiert bzw. angepasst und/oder ausgerichtet werden.

Bei der erfindungsgemäßen Vermessung können so beispielsweise - so unter Verwendung von solchem Vorwissen vorgeschlagene - Punkte automatisch angefahren (und dann vermessen) werden. Insbesondere bei komplexen Werkzeugen kann dies von besonderem Vorteil sein, wenn dadurch Schneidenbereiche in unterschiedlichen Höhen und/oder Drehwinkellagen (bei einem solchen komplexen Werkzeug) angefahren werden.

Anders bzw. allgemeiner ausgedrückt, Vorwissen, insbesondere zu Schneidenpunkte bzw. zum Schneidenbereich eines Werkzeugs, beispielsweise aus vorliegenden, beispielsweise Herstellerseitig, bzw. normierten Daten zur Verfügung gestellte, Werkzeugdaten, kann verwendet werden, um den bzw. die vermessenen Schneidenpunkte festzulegen und/oder, zu überprüfen und/oder gegebenenfalls anzupassen.

In dem digitalen Abbild wird dann unter Verwendung zumindest des ersten Schneidenpunktes, insbesondere des ersten und des zweiten Schneidenpunktes, ein Schneidenbereich ermittelt ("kollisionsrelevanter digitaler Zwilling" (, im Fall von Zerspanungswerkzeugen auch "zerspanungsrelevanter digitaler Zwilling")) .

Bei - komplexen - Werkzeugen, die gegebenenfalls mehrere Schneidenbereiche haben, wird für jeden Schneidenbereich separat zumindest ein erster Schneidenpunkt, insbesondere ein erster und ein zweiter Schneidenpunkt, vermessen und daraus der jeweilige Schneidenbereich ermittelt.

Somit kann die Erfindung auf schnelle Weise vom allgemeinen digitalen Zwilling auf schnellst mögliche Weise zum kollisionsrelevanten Zwilling kommen - und darüber hinaus einen zerspanungsrelevanten Zwilling ermitteln, der sofort in einem Programmiersystem verwendet werden kann.

Darüber hinaus hat insbesondere die zusätzliche Vermessung - und Verwendung einer Messung den Vorteil, beispielsweise gegenüber einer reinen (automatischen/automatisierten) Bildauswertung bei einem digitalen Abbild, dass durch die zusätzliche Vermessung eine Unsicherheit einer automatischen Bildauswertung bzw. deren Logik vermieden wird. Die Genauigkeit und/oder Zuverlässigkeit bei dem ermittelten Schneidenbereich ist dadurch höher.

In einer Modifizierung kann auch vorgesehen sein, dass durch die Abtastung bzw. bei der Abtastung bereits zumindest der erste Schneidenpunkt bzw. der erste und der zweite Schneidenpunkt bzw. die Schneidenpunkte ermittelt werden, beispielsweise automatisiert aus den Abtastpunkten bzw. aus dem digitalen Abbild. In diesem Fall kann die Vermessung des bzw. der Schneidenpunkte - als zusätzlicher Schritt - entfallen.

"Digitales Abbild" kann ein zweidimensionales oder dreidimensionales Abbild, beispielsweise einen Konturverlauf oder eine Hüllkontur, meinen.

Abgetastet kann dabei insbesondere meinen, dass, beispielsweise mittels einer insbesondere optischen Vermessungs- bzw. Messeinheit/-einrichtung, wie sie zum Beispiel bei Voreinstellgeräten im Einsatz sind, Bilder unterschiedlicher Bereiche eines Objektes, hier des Werkzeugs bzw. des Komplettwerkzeugs, beispielsweise in einem Durchlichtverfahren, aufgenommen - und zur Generierung des digitalen Abbildes und/oder kollisionsrelevanten Zwillings ausgewertet - werden.

Die Abtastung - je nach Art ihrer Durchführung - kann zu einem zweidimensionalen oder auch dreidimensionalen digitalen Abbild führen, beispielsweise zu einem dreidimensionalen Abbild dadurch, dass das Objekt während der Abtastung gedreht wird.

Alternativ kann auch aus einem zweidimensionalen Abbild mathematisch ein dreidimensionales Abbild erzeugt bzw. errechnet werden. Beispielsweise kann die vorerwähnte Drehung des Objekts mathematisch "simuliert" werden, um so aus dem zweidimensionalen Abbild ein dreidimensionales Bild zu machen.

"Unterschiedliche Bereiche" kann das Werkzeug in verschiedenen Höhen und/oder das Werkzeug in verschiedenen gedrehten Ansichten meinen.

Insbesondere kann durch ein solches Abtasten eine Kontur bzw. ein Konturverlauf oder eine Hüllkontur eines Objekts, wie hier des Werkzeugs bzw. Komplettwerkzeugs, ermittelt werden.

Unter einer "Kontur" bzw. einem "Konturverlauf" soll insbesondere eine maximale Ausdehnung einer beliebigen Querschnittsfläche entlang einer Rotationsachse des Werkzeugs bzw. des Komplettwerkzeugs verstanden werden. Die Kontur bzw. der Konturverlauf ist insbesondere dazu geeignet, Kollisionen mit einem Werkstück in einem Bearbeitungsprozess im Vorhinein berechnen zu können (Kollisionssimulation/-betrachtung). Entsprechendes gilt für die Hüllkontur, welche als dreidimensionale Kontur bzw. Konturverlauf verstanden werden kann.

Dabei liegt der Erfindung die Erkenntnis zugrunde, dass für jegliche Kollisionsbetrachtung nutzbare Schneidenbereiche des Werkzeugs bzw. Schneidwerkzeugs aus der gesamten Kontur erkannt und unterschieden werden müssen. Denn die Schneidenbereiche des Werkzeugs dürfen in das zu bearbeitende Werkstück eintauchen, ohne dass eine Kollision vorliegt. Andererseits müssen die Schneidenbereiche bei einer Kollisionsbetrachtung gegenüber Maschinenelementen wie z. B. einem Schraubstock zur Spannung des Werkstückes berücksichtigt werden.

Insofern unterscheidet die Erfindung zwischen dem "normalen" digitalen Zwilling und einem kollisionsrelevanten bzw. zerspanungsrelevanten digitalen Zwilling.

Dabei kann dann unter dem "zerspanungsrelevanten Zwilling" ein solcher verstanden werden, welcher neben den dem kollisionsrelevanten Zwilling zugewiesenen Informationen weitere Informationen und/oder diese ursprünglichen Informationen in besonderer Struktur bzw. Verarbeitung, beispielsweise einer Layerstruktur und/oder durch, insbesondere farbliche, Markierung, bevorzugt auch für CAD/CAM Systeme und/oder Bearbeitungssysteme konform bzw. kompatibel, aufweist.

Demzufolge bestimmt die Erfindung diesen bei der Kollisionsbetrachtung zu differenzierenden Schneidenbereich vereinfacht, aber doch mit ausreichender Genauigkeit, dadurch, dass zumindest ein erster Schneidenpunkt bzw. gegebenenfalls ein erster und ein zweiter Schneidenpunkt, wie ein Schneidenanfangspunkt und ein Schneidenendpunkt, bei dem Werkzeug oder dem Komplettwerkzeug vermessen wird.

Vermessen mag in diesem Zusammenhang auch bedeuten, dass hier Daten mit hoher Genauigkeit generiert werden können, kann eine Vermessung (beispielsweise durch entsprechende hochauflösende Messsysteme) höhere Genauigkeit zur Verfügung stellen - als anderweitige Ermittlungen bzw. Festlegungen.

Dies geschieht im Gegensatz zum Stand der Technik nicht theoretisch an einer von der realen Fertigungsumgebung entfernten CAD/CAM Programmierumgebung, wo nur verschiedene Modelle zusammengeführt werden, sondern praktisch am tatsächlichen Werkzeug bzw. Komplettwerkzeug (nach Montage) - zweckmäßigerweise - direkt in der Fertigung bzw. Werkzeugvoreinstellung.

Auf diese Weise werden Schnittstellenprobleme, fehlerhafte und unvollständige Datensätze und/oder Werkzeugzeichnungen oder -modelle und/oder fehlende Feedbackschleifen zum tatsächlichen Werkzeug vermieden.

Ferner können durch das bzw. bei dem manuellen Bestimmen bzw. Vermessen - in der Fachabteilung - intrinsische Erfahrungswerte, wie Längentoleranzen nach dem Nachschleifen, Halsfreischliffe und/oder Spanfreiräume, berücksichtigt werden.

Zumindest der erste, gegebenenfalls der erste und der zweite Schneidenpunkt bzw. Schneidenanfangspunkt und Schneidenendpunkt, können dann den Schneidenbereich definieren - und dann beim digitalen Abbild des Werkzeugs bzw. Komplettwerkzeugs berücksichtigt werden (kollisionsrelevanter bzw. zerspanungsrelevanter digitaler Zwilling).

Des Weiteren gereicht der Erfindung von Vorteil, dass das Verfahren einen integrierten Prozess bzw. ein integriertes (Gesamt-)Verfahren bildet, welches darüber hinaus so in einen Gesamtablauf eines (vorhandenen) Prozesses einbindbar bzw. integrierbar ist, beispielsweise in die Werkzeugvermessung in einem Voreinstellgerät, insbesondere integrierbar in eine dortige Vermessungseinheit bzw. dortiges Messsystem.

Wo bislang für ein digitales Abbild eines Werkzeugs bzw. Komplettwerkzeugs gegebenenfalls Daten aus verschiedene Datenquellen (aus unterschiedlichen Prozessen), beispielsweise (CAD/CAM-)Daten von Werkzeugen, (CAD/CAM-)Daten von Werkzeugaufnahmen - und gegebenenfalls wieder separate (CAD/CAM-)Daten von Schneiden u.Ä., zu einer gemeinsamen (Gesamt-)Datenstruktur kombiniert werden mussten (vgl. Layer-Struktur nach DIN) (, d.h., veranschaulicht ausgedrückt, wobei so das digitale Abbild aus Daten solcher verschiedener Datenquellen "zusammengebaut" werden musste), wodurch Schnittstellenprobleme, insbesondere durch - beispielsweise nicht kompatible bzw. konforme Referenzpunkte, und umständlich, weil wiederholte, Feedback-Ketten nahezu unvermeidlich waren, so ermöglicht die Erfindung - als integrierbares bzw. integriertes, einen Gesamtablauf darstellendes Verfahren, dass (integrierte, kompatible) Daten aus einem Ursprung generiert und für den kollisionsrelevanten digitalen Zwilling verwendet werden können.

Datenkonformität und Datenkompatibilität sowie an einem "Ort" bzw. aus einer Quelle generierte und verfügbare, den tatsächlichen Istwerten entsprechende Daten gewährleisten so bei der Erfindung bzw. bei dem Verfahren hohe Effizienz und Effektivität, Einfachheit und geringe Fehleranfälligkeit.

Kurz und einfach ausgedrückt, Schnittstellenprobleme und Datenkonformitätsprobleme bzw. allg. Probleme bei einer Datenintegration können durch die Erfindung vermieden werden.

Wird so insbesondere das Verfahren in eine Werkzeugvermessung (eines Voreinstellgeräts) integriert, wo dann neben dem erfindungsgemäßen digitalen Abbild bzw. dem kollisionsrelevanten digitalen Zwilling auch die üblichen Voreinstellungsdaten generiert bzw. vermessen werden, so kann durch Zusammenführung beider Datensätze von aus einer Datenquelle stammenden konformen Daten ein integrierter, vollumfänglich funktionaler Datensatz (, für die Voreinstellung und die Kollisionsbetrachtung), beispielsweise der Werkzeugmaschine oder einem Programmierplatz, insbesondere eines (digitalen) Datenformats, zur Verfügung gestellt werden.

Dabei ist es insbesondere zweckmäßig, das digitale Abbild und/oder den kollisionsrelevanten digitalen Zwilling in Form von Daten bzw. in Form von einem Datensatz in einem digitalen Datenformat zur Verfügung zu stellen, zum Beispiel in einem Datenformat VDA-FS, IFC, IGES, STEP (ISO-Standard 10303), STL oder DXF.

Des Weiteren kann es sinnvoll sein, eine Bilddatei, zum Beispiel in dem Datenformat JPEG, Windows Bitmap oder Graphics Interchange Format, zu generieren, die das Gesamte und/oder einen oder mehrere Ausschnitte des Werkzeugs bzw. Komplettwerkzeugs und/oder des digitalen Abbildes und/oder des kollisionsrelevanten digitalen Zwillings zeigt.

Ferner ist es auch zweckmäßig, eine Schnittstelle vorzusehen, um - bei dem Verfahren generierte - Daten bzw. Datensätze mittels einer Datenverbindung zu übertragen und/oder diese auf ein Speichermedium zu schreiben.

Unter einem "Speichermedium" sollen insbesondere in der Datenverarbeitung eingesetzte Datenträger, wie z.B. Flashspeicher, USB-Speicher, Disketten oder Festplatten, verstanden werden. Unter einer "Datenverbindung" soll insbesondere eine drahtgebundene und/oder eine drahtlose Datenverbindung, wie insbesondere eine funkgebundene Datenverbindung, verstanden werden.

Über die Datenverbindung können Daten bzw. Datensätze zu einer Vorrichtung bzw. Gerät, wie beispielsweise einer Werkzeugmaschine, insbesondere mittels eines Protokolls, übertragen werden.

Dem Verfahren gereicht weiterhin auch zum Vorteil, dass, wie erkannt wurde, für den digitalen und den Kollisionsschutz bzw. für die Kollisionssimulation verwendeten Zwilling jene sehr hohe Genauigkeit, die für die Werkzeugvoreinstellung benötigt wird, nicht notwendig ist.

So ist es vorteilhaft, die Abtastung des Werkzeugs oder des Komplettwerkzeugs - diskret "nur" - in verschiedenen (vorgebbaren) Werkzeug- bzw. Komplettwerkzeughöhen (gegebenenfalls dort auch in verschiedenen Drehpositionen) durchzuführen - und aus diesen das digitale Abbild zu ermitteln.

Durch geeignete mathematische Verfahren, wie beispielsweise durch Interpolation zwischen den ermittelten, so zahlenmäßig begrenzbaren Abtastdaten, kann dann aus den Abtastdaten ein 2D Modell und/oder ein 3D Modell (bzw. 2D bzw. 3D Konturmodell) des Werkzeugs bzw. Komplettwerkzeugs als digitales Abbild des Werkzeugs bzw. Komplettwerkzeugs errechnet werden.

In dem digitalen Abbild wird dann - für den kollisionsrelevanten Zwilling - der - "nicht kollisionsrelevante" Schneidenbereich definiert.

Wird an den digitalen und für den Kollisionsschutz bzw. für die Kollisionssimulation verwendeten Zwilling, hier dann der kollisionsrelevante digitale Zwilling, eine geringe Genauigkeitsanforderung gestellt, so kann durch Vorgabe einer sinnvoll begrenzten Anzahl von Abtasthöhen das ermittelte Datenvolumen begrenzt, Rechenzeit und Speicherplatz eingespart und die Kollisionssimulation - ohne Einbuße an Zuverlässigkeit - durchgeführt werden.

Ferner ist es zweckmäßig, wenn bei der Bestimmung des Schneidenbereichs unter Verwendung zumindest des ersten, gegebenenfalls des ersten und zweiten Schneidenpunktes, diesem Punkt bzw. diesen Punkten ein nächstliegender Punkt bzw. nächstliegende Punkte in dem digitalen Abbild des Werkzeugs oder Komplettwerkzeugs bestimmt werden und der Schneidenbereich unter Verwendung dieses nächstliegenden Punktes/ dieser nächstliegenden Punkte definiert bzw. ermittelt wird, insbesondere in dem digitalen Abbild markierbar ist.

Vereinfacht ausgedrückt, unter Verwendung des "nachvermessenen" Schneidenpunktes bzw. der "nachvermessenen" Schneidenpunkte wird der entsprechende Punkt bzw. werden die entsprechenden Punkte im digitalen Abbild gesucht, beispielsweise über "geringste Abstände", wodurch der bzw. die so gefundenen "Abbildpunkte" - als Punkt bzw. als Punkte des digitalen Abbildes so den Schneidenbereich im digitalen Abbild definieren können.

Dabei erweist sich hier auch von Vorteil, dass an die Nachvermessung des zumindest einen Schneidenpunkts bzw. gegebenenfalls der zwei Schneidenpunkte keine große Genauigkeit gestellt werden muss, da einerseits das digitale Abbild bzw. der kollisionsrelevante digitale Zwilling eh nur geringeren Genauigkeitsanforderungen unterliegt, andererseits aber aus dem vermessenen Schneidenpunkt bzw. den vermessenen Schneidenpunkten erst der bzw. die Abbildpunkte ermittelt werden.

Ferner kann auch vorgesehen sein, dass bei der Abtastung ein Scannen, beispielsweise ein 2D oder 3D Scan, des Werkzeugs oder des Komplettwerkzeugs durchgeführt wird.

Zweckmäßig mag es auch sein, das Scannen bzw. das Abtasten mittels unterschiedlicher Messsysteme durchzuführen, beispielsweise laser- oder ultraschallgestützte Systeme bzw. optische und/oder taktile System u.Ä..

Während des 2D Scans ist es zweckmäßig, dass eine beidseitige Kontur des Werkzeugs oder des Komplettwerkzeugs in einer vorgegebenen festen Position des Werkzeugs bzw. Komplettwerkzeugs vermessen wird, wobei so bei der Vermessung das Werkzeug oder das Komplettwerkzeug unverdreht bleibt - und so eine 2D Kontur ermittelbar ist.

Dabei kann hier insbesondere vorgesehen sein, dass bei der Abtastung dann ein 2D Scan des Werkzeugs oder des Komplettwerkzeugs durchgeführt wird, wenn das Werkzeug ein nicht rotierendes Werkzeug, wie beispielsweise ein Drehmeißel, ist.

Auch kann vorgesehen werden, dass bei der Abtastung ein 3D Scan des Werkzeugs oder des Komplettwerkzeugs durchgeführt wird

Während des 3D Scans ist es zweckmäßig, dass eine einseitige Kontur des Werkzeugs oder des Komplettwerkzeugs vermessen wird, wobei bei der Vermessung das Werkzeug oder das Komplettwerkzeug gedreht wird - und so eine Hüllkontur ermittelbar ist.

Dabei kann hier insbesondere vorgesehen sein, dass bei der Abtastung dann ein 3D Scan des Werkzeugs oder des Komplettwerkzeugs durchgeführt wird, wenn das Werkzeug ein rotierendes Werkzeug, wie beispielsweise ein Fräswerkzeug, ist.

Rotierendes Werkzeug kann dabei meinen, dass ein solches Werkzeug bei der Bearbeitung eines Werkstücks rotiert wird; nicht rotierendes Werkzeug kann meinen, dass ein solches Werkzeug bei der Bearbeitung eines Werkstücks nicht rotiert wird.

"Einseitig" bzw. "beidseitig" kann meinen, dass die Kontur nur einseitig (ggfl. bis zu einer Mittelachse, Symmetrieachse) bzw. beidseitig am zweidimensional abgebildeten Werkzeug bzw. Komplettwerkzeug bestimmt wird.

Eine erfindungsgemäße Abtastung - für die Erstellung des digitalen Zwillings - kann auch durch ein Stitchingverfahren (Aneinanderreihen von Bildern) erfolgen.

Hierbei können - gegebenenfalls hochaufgelöste - Einzelbilder des Werkzeugs bzw. des Komplettwerkzeugs bzw. von Teilen des Werkzeugs bzw. Komplettwerkzeugs (d.h., hier wird nur ein relevanter Bereich, wie eine Kante, gestitcht) erzeugt - und diese zu einem Gesamtbild des Werkzeugs bzw. Gesamtwerkzeugs zusammengefügt werden ("Stitching") (, wohingegen beim Scannen Linien aneinandergesetzt werden). Solches Gesamtbild kann der digitale Zwilling sein bzw. verwendet werden, um den digitalen Zwilling zu erstellen.

Das Stitching kann beispielsweise im Durchlichtverfahren, wie auch im Auflichtverfahren und/oder andere Bildverarbeitungsmethoden erfolgen. Durch das Auflichtverfahren sind Messungen möglich, die das Durchlichtverfahren nicht zur Verfügung stellen kann, beispielsweise bezüglich Oberflächen/- strukturen.

Bei einem solchen Stitching können auch Koordinaten der Einzelbilder festgehalten werden -, um so auch anhand des Gesamtbildes Positionen und/oder Koordinaten von Bildpunkten zu ermitteln. Anders bzw. anschaulich ausgedrückt, dieses "Auslesen" von Bildpunkten aus dem Gesamtbild kann auch als eine Vermessung von Punkten angesehen - und so auch auf Schneidenpunkte angewendet werden. Generell ist es also möglich, sichtbare Elemente auf dem Gesamtbild auch nachträglich zu bestimmen bzw. zu vermessen.

Zweckmäßig kann es auch sein, wenn für die Erstellung des digitalen Abbildes des Komplettwerkzeugs nur die Abtastung des Werkzeugs bei dem Komplettwerkzeug durchgeführt wird, wenn und wobei Daten für das digitale Abbild der Werkzeugaufnahme anderweitig vorliegen, insbesondere bereits abgespeichert sind und/oder eingelesen werden.

Anders ausgedrückt, die Abtastung kann gegebenenfalls auf nur "fehlende" Bereiche des Werkzeugs bzw. Komplettwerkzeugs beschränkt werden, wenn diesbezügliches Vorwissen, beispielsweise herstellerseitig, und oder Standardisierungen und Normen (DIN/ISO), zum Beispiel über die Werkzeugaufnahme und/oder die Werkzeugschnittstelle und/oder diesbezügliche Geometrieinformationen, wie Längen und/oder Durchmesser u.Ä., zur Verfügung gestellt, vorliegt (und gegebenenfalls über (definierte) Schnittstellen eingelesen wird).

Abtastung und Vorwissen können so zum bzw. im digitalen Abbild zusammengeführt werden, was Prozesszeit und/oder Prozesskapazität einspart. Auch können dadurch sich auf ein Abtasten nachteilig auswirkende Gegebenheiten, wie beispielsweise Verschmutzungen u.Ä. am Werkzeug bzw. Komplettwerkzeug, ausgeschaltet werden.

Ferner ist es weiter auch zweckmäßig, wenn bei der Erstellung des digitalen Abbildes des Werkzeugs oder des Komplettwerkzeug mindestens ein Datensatz, insbesondere mehrere Datensätze, erzeugt wird bzw. werden, insbesondere ein Datensatz mit Daten des digitalen Abbildes und mit Daten für den ermittelten Schneidenbereich und/oder ein Datensatz mit Daten des digitalen Abbildes und mit Daten für den ermittelten Schneidenbereich sowie auch mit Vermessungsdaten des Werkzeugs, insbesondere aus einer Vermessung unter Verwendung einer erfindungsgemäßen Vorrichtung zum Vermessen eines Werkzeugs oder eines Komplettwerkzeugs.

Von besonderer Zweckmäßigkeit ist es, wenn das Werkzeug oder das Komplettwerkzeug, insbesondere unter Verwendung einer erfindungsgemäßen Vorrichtung zum Vermessen eines Werkzeugs oder eines Komplettwerkzeugs, vermessen wird.

D.h., hier ist vorgesehen, dass das Werkzeug bzw. das Komplettwerkzeug auch noch - wie üblich - Vermessen wird, insbesondere unter Verwendung einer erfindungsgemäßen **Vorrichtung.**

Weiterbildend kann dann auch vorgesehen sein, dass eine Kollisionsprüfung unter Verwendung des erfindungsgemäß ermittelten digitalen Abbildes bzw. des kollisionsrelevanten digitalen Zwillings durchgeführt wird.

Besonders zweckmäßig ist es, dass beispielsweise durch Markierung der (Schneiden-)Anfang- und/oder Endpunkte samt der Vermessung des Schneidenbereichs eine Datei mit einer laut nach ISO notwendigen farblichen Kennzeichnung und/oder Layerstruktur erstellt wird, so dass eine Verwendung in gängigen Programmiersystemen automatisiert und (im Idealfall) ohne zusätzliche Nachbearbeitung erfolgen kann (zerspanungsrelevanter digitaler Zwilling).

Anders bzw. vereinfacht und allgemein ausgedrückt, erfindungsgemäß ermittelte Schneideninformation kann auch anderweitig bzw. anderen Systemen, wie Bearbeitungs- und/oder Programmiersystemen (zum Beispiel CAD/CAM Systemen) zur Verfügung gestellt werden, beispielsweise in Layern und/oder Layerstrukturen oder anderen digitalen Markierungen.

Zweckmäßig erscheint es so im Allgemeinen auch, wenn erfindungsgemäß generierte Daten in genormter bzw. standardisierter Form, beispielsweise in einer Layerstruktur, für andere Systeme (wie beispielsweise CAD/CAM Systeme) zur Verfügung gestellt werden, beispiels- und zweckmäßigerweise mittels DXF- und/oder step-Dateien.

Auch kann es besonders zweckmäßig sein, erfindungsgemäß für ein Werkzeug bzw. Komplettwerkzeug generierte Daten (bzw. Datensätze) eine Identifizierung, beispielsweise in Form einer ID Nummer, zuzuweisen, welche dann für das erfindungsgemäß gehandelte Werkzeug bzw. Komplettwerkzeug spezifisch ist. Derart - für ein Werkzeug bzw. Komplettwerkzeug - spezifizierte Daten können dann in Bearbeitungsprogrammen, (Lager-)Verwaltungssystemen u.Ä. weiterverwendet werden.

Ferner kann es auch zweckmäßig sein, wenn ein erfindungsgemä-ßes **Verfahren** mit einem Schneidwerkzeug und/oder mit einem in der Werkzeugaufnahme eingeschrumpften Schneidwerkzeug durchgeführt wird.

Die **Vorrichtung** zum Vermessen eines Werkzeugs oder eines Komplettwerkzeugs aus einer Werkzeugaufnahme und einem in der Werkzeugaufnahme eingespannten Werkzeug sieht eine Vermessungseinheit und eine Rechen- und Steuereinheit vor.

Diese Vermessungseinheit und die Rechen- und Steuereinheit sind derart eingerichtet, dass für die Erstellung eines digitalen Abbildes des Werkzeugs oder des Komplettwerkzeugs das Werkzeug oder das Komplettwerkzeug abgetastet wird, zusätzlich zur Abtastung des Werkzeugs oder des Komplettwerkzeugs zumindest ein erster Schneidenpunkt, insbesondere der erste Schneidenpunkt, beispielsweise ein Schneidenanfangspunkt, und ein zweiter Schneidenpunkt, beispielsweise ein Schneidenendpunkt, bei dem Werkzeug oder dem Komplettwerkzeug vermessen wird und in dem digitalen Abbild unter Verwendung zumindest des ersten Schneidenpunktes, insbesondere des ersten und des zweiten Schneidenpunktes, ein Schneidenbereich markiert wird.

Insbesondere ist so die Vermessungseinheit und/oder die Rechen- und Steuereinheit eingerichtet zur Durchführung eines der vorbeschriebenen erfindungsgemäßen **Verfahren** oder erfindungsgemäßer Verfahrensschritte.

Dabei kann eine "...einheit", wie die Vermessungseinheit und die Rechen- und Steuereinheit, insbesondere auch einen Prozessor, eine Speichereinheit, eine Schnittstelle und/oder ein, insbesondere in der Speichereinheit gespeichertes, Betriebs-, Steuer- und Berechnungsprogramm aufweisen.

Vereinfacht und anschaulich ausgedrückt, es ist besonderes zweckmäßig erfindungsgemäße **Verfahren** und/oder auch erfindungsgemäße Verfahrensschritte, wie das Abtasten und/oder das "Nachvermessen" des Schneidenpunktes bzw. der Schneidenpunkte, unter Verwendung einer erfindungsgemäßen **Vorrichtung** durchzuführen.

Als besonderes zweckmäßig erweist sich dabei, wenn an sich bislang übliche Voreinstellgeräte um die erfindungsgemäßen Funktionalitäten (vorrichtungs- und/oder verfahrensseitig) erweitert werden.

Von besonderem Vorteil erweist sich hierbei, dass bislang übliche Voreinstellgeräte hardwareseitig und/oder steuerungsseitig nahezu unverändert bleiben können, wohin gehend sich die erfindungsgemäße Erweiterung nur softwareseitig ersteckt. Neue bzw. angepasste Programmmodule können so dies gewährleisten.

Gegebenenfalls kann - zur Durchführung - eines der vorbeschriebenen erfindungsgemäßen **Verfahren** oder erfindungsgemäßer Verfahrensschritte die Vermessungseinheit und/oder die erfindungsgemäße Vorrichtung eine Steuereinheit aufweisen, die für eine entsprechende Ansteuerung der Vermessungseinheit zur Durchführung eines der vorbeschriebenen erfindungsgemäßen **Verfahren** oder erfindungsgemäßer Verfahrensschritte sorgt.

Ein **(Werkzeug-)Voreinstellgerät** sieht eine vorbeschriebene erfindungsgemäße **Vorrichtung** zum Vermessen eines Werkzeugs oder eines Komplettwerkzeugs vor.

Ein **Bearbeitungszentrum** sieht eine vorbeschriebene erfindungsgemäße **Vorrichtung** zum Vermessen eines Werkzeugs oder eines Komplettwerkzeugs, insbesondere ein erfindungsgemäßes **(Werkzeug-)Voreinstellgerät,** sowie eine Werkzeugmaschine vor.

Zweckmäßig ist es hier insbesondere, wenn die **Vorrichtung** und die Werkzeugmaschine auf einem gemeinsamen Sockel montiert sind und/oder wenn die **Vorrichtung** in die Werkzeugmaschine (funktionell und/oder bauteilseitig) in die Werkzeugmaschine integriert ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen - auch zwischen den Anordnungen/Vorrichtungen und Verfahren - zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: schematisch einen Prozess für eine Bearbeitung eines Werkstücks unter Verwendung eines Voreinstellgeräts gemäß einer erfindungsgemäßen Ausführung,
- FIG 2: das Voreinstellgerät aus FIG 1 in einer Detailansicht,

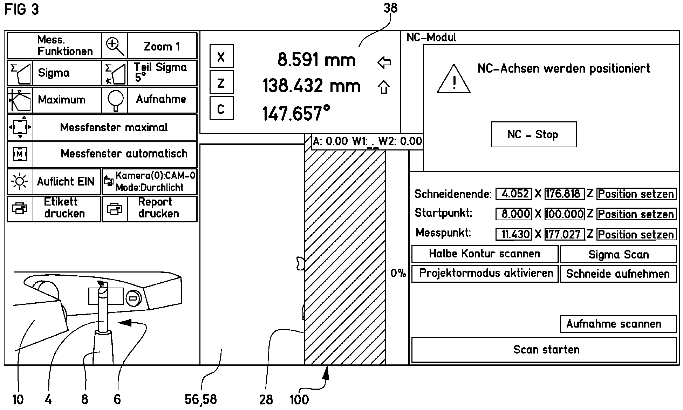

- FIG 3: verdeutlicht durch ein Bildschirmbild das Abtasten eines Komplettwerkzeugs, hier ein in einer Werkzeugaufnahme eingespanntes Drehwerkzeug, bei einem 2D Scan gemäß einer erfindungsgemäßen Ausführung,

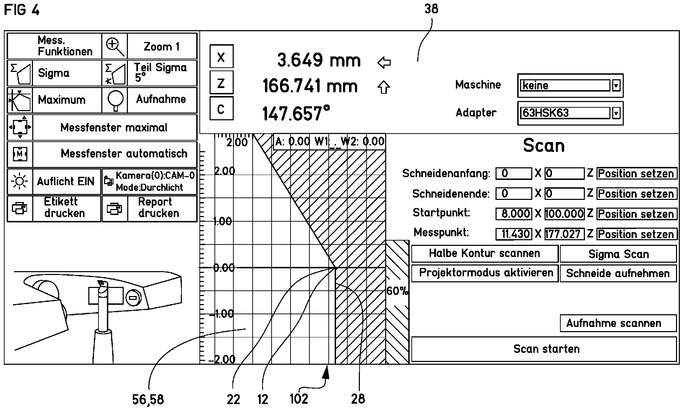

- FIG 4: verdeutlicht durch ein Bildschirmbild das Vermessen eines ersten Schneidenpunkts eines Werkzeugs, hier ein in einer Werkzeugaufnahme eingespanntes Drehwerkzeug, gemäß einer erfindungsgemäßen Ausführung,

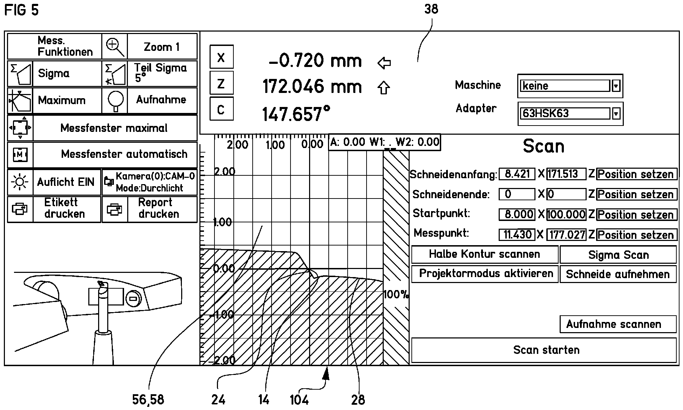

- FIG 5: verdeutlicht durch ein Bildschirmbild das Vermessen eines zweiten Schneidenpunkts eines Werkzeugs, hier ein in einer Werkzeugaufnahme eingespanntes Drehwerkzeug, gemäß einer erfindungsgemäßen Ausführung,

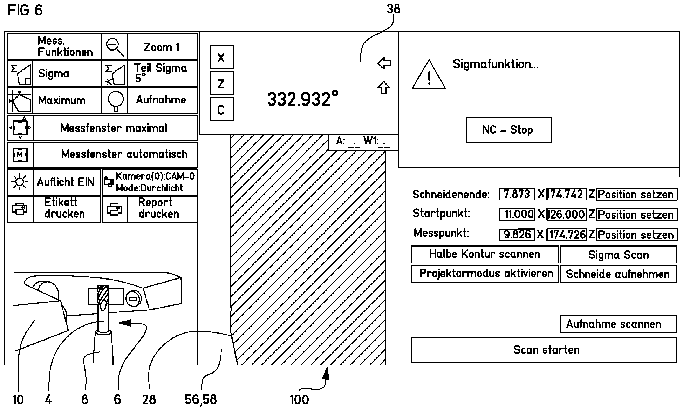

- FIG 6: verdeutlicht durch ein Bildschirmbild das Abtasten eines Komplettwerkzeugs, hier ein in einer Werkzeugaufnahme eingespanntes Fräswerkzeug, bei einem 3D Scan gemäß einer erfindungsgemäßen Ausführung,

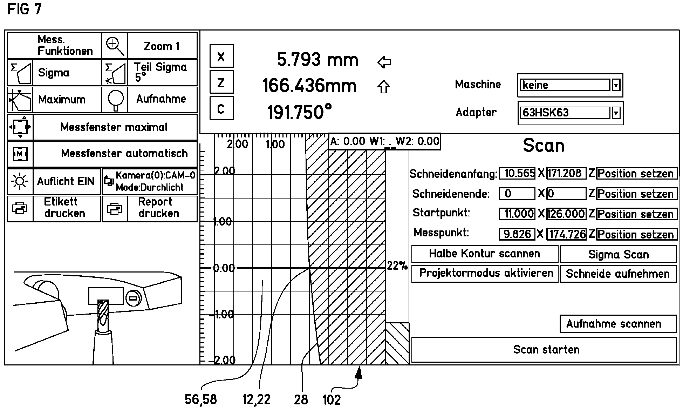

- FIG 7: verdeutlicht durch ein Bildschirmbild das Vermessen eines ersten Schneidenpunkts eines Werkzeugs, hier ein in einer Werkzeugaufnahme eingespanntes Fräswerkzeug, gemäß einer erfindungsgemäßen Ausführung,

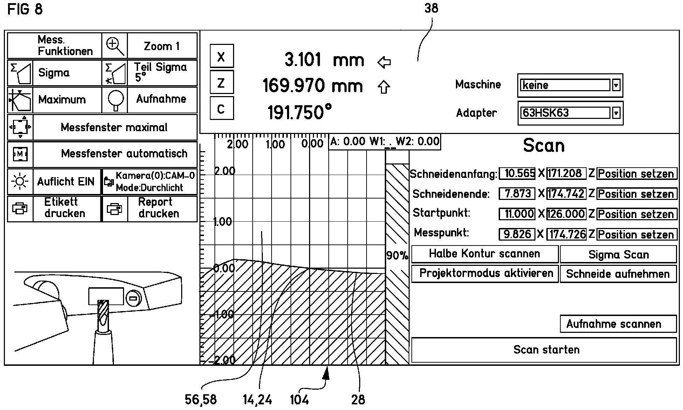

- FIG 8: verdeutlicht durch ein Bildschirmbild das Vermessen eines zweiten Schneidenpunkts eines Werkzeugs, hier ein in einer Werkzeugaufnahme eingespanntes Fräswerkzeug, gemäß einer erfindungsgemäßen Ausführung,
- FIG 9: einen kollisionsrelevanten digitalen Zwilling gemäß einer erfindungsgemäßen Ausführung,
- FIG 10a und b: ein im Durchlichtverfahren gestitchtes Abbild eines Werkzeugs gemäß einer erfindungsgemäßen Ausführung bzw. ein im Auflichtverfahren gestitchtes Abbild eines Werkzeugs gemäß einer erfindungsgemäßen Ausführung.

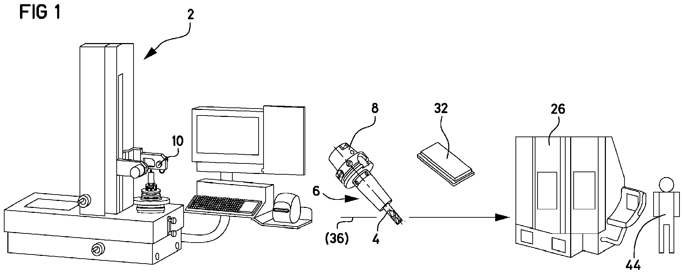

### Schema "Bearbeitung eines Werkstücks" (FIG 1)

FIG 1 verdeutlicht eine Bearbeitung eines Werkstücks 32 mittels einer Werkzeugmaschine 26, hier eine Fräsbearbeitung eines zu fräsenden Werkstücks 32 mittels einer CNC-Werkzeug-/- bearbeitungsmaschine 26.

Die Bearbeitung umfasst, wie FIG 1 zeigt, die CNC-Werkzeugmaschine 26, auf welcher das Werkstück 32 - mittels eines in einer Werkzeugaufnahme 8, hier ein (Hydrodehn-)Spannfutter 8, eingespannten (Fräs-)Werkzeugs 4 (im Gesamten als Komplettwerkzeug 6 bezeichnet) - bearbeitet bzw. gefräst wird.

Vor Bearbeitung des Werkstücks 32 wird bei bzw. auf der Werkzeugmaschine 26 eine simulierte Kollisionsprüfung für die Bearbeitung durchgeführt.

Alternativ zu der Kollisionsprüfung auf der Werkzeugmaschine, könnte diese genauso auch auf einem separaten Programmierarbeitsplatz durchgeführt werden.

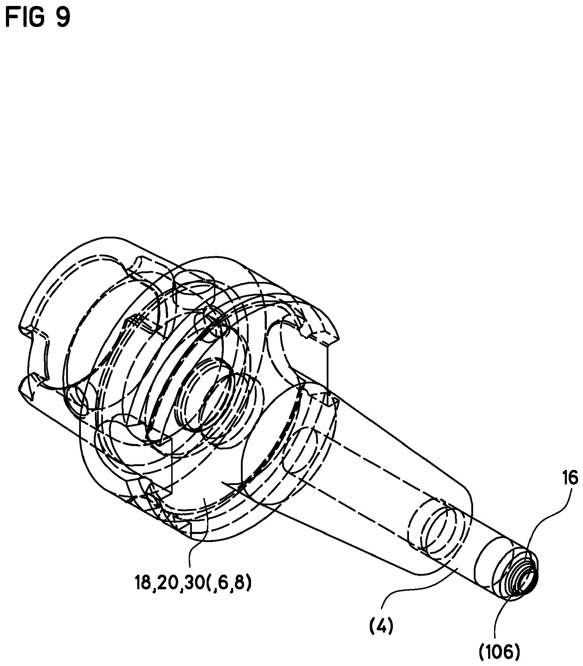

Dazu ist, wie FIG 1 auch zeigt, ein Voreinstellgerät 2 vorgesehen, welches die - für die Voreinstellung nötigen - Daten (Voreinstellungsdaten) sowie die - für die Kollisionsprüfung nötigen - Daten (kollisionsrelevanter digitaler Zwilling 20 - vgl. FIG 9) generiert, welche - wie in FIG 1 durch einen Pfeil verdeutlicht - (von dem Voreinstellgerät 2) in Form mehrerer Datensätze an die Werkzeugmaschine 26 übermittelt werden.

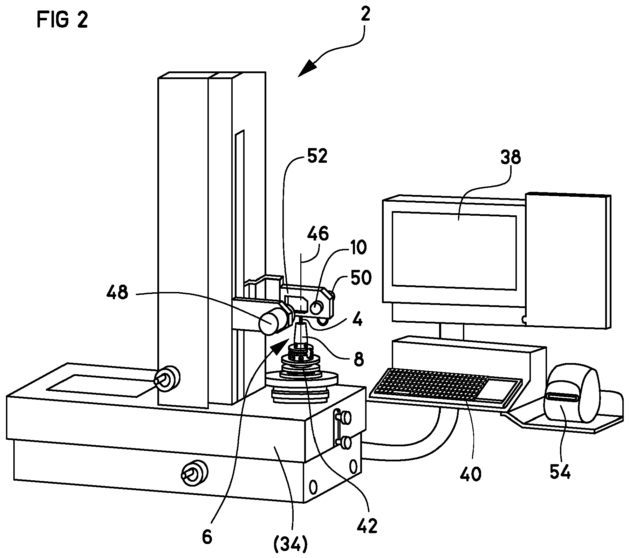

### Voreinstellgerät 2 (FIG 2)

FIG 2 zeigt das Werkzeugvoreinstellgerät bzw. kurz Voreinstellgerät 2 - zum Vermessen eines Werkzeugs 4 bzw. Komplettwerkzeugs 6 im Detail.

Das Voreinstellgerät 2 weist eine optische Messvorrichtung 10, in Form einer Kameravorrichtung 10, auf, mittels welcher von dem Werkzeug 4 bzw. Komplettwerkzeug 6 Informationen aufnehmbar sind.

Zudem weist das Voreinstellgerät 2 eine Rechen- und Steuereinheit 34 auf, die u.A. einen Prozessor, eine Speichereinheit, eine Schnittstelle mit der Kameravorrichtung, eine Schnittstelle 36 mit der Werkzeugmaschine und in der Speichereinheit gespeicherte, durch die Rechen- und Steuereinheit 34 ausführbare, über ein Anzeigemittel 38 und Eingabemittel 40 "bedienbare" Berechnungs- und Betriebsprogramme, wie die Vermessung eines Werkzeugs 4 und die Generierung der Daten für einen kollisionsrelevanten digitalen Zwilling 20 eines Werkzeugs 4 bzw. Komplettwerkzeugs 6, umfasst.

Die Rechen- und Steuereinheit 34 ist so - mittels entsprechender Berechnungs- und Betriebsprogramme - dazu vorgesehen, eine übliche Vermessung eines Werkzeugs 4 bzw. eines Komplettwerkzeugs 6 - unter Verwendung der Kameravorrichtung 10 - ablaufen zu lassen bzw. durchzuführen, wobei Voreinstelldaten von dem Werkzeug 4 bzw. dem Komplettwerkzeug 6 generiert werden.

Des Weiteren ermöglicht die Rechen- und Steuereinheit 34 - ebenfalls mittels entsprechender Berechnungs- und Betriebsprogramme und unter Verwendung der Kameravorrichtung 10 -, Daten des Werkzeugs 4 bzw. des Komplettwerkzeugs 6 für die Kollisionsprüfung zu generieren, nämlich den kollisionsrelevanten digitalen Zwilling 20.

Die Voreinstelldaten und/oder der kollisionsrelevanter digitale Zwilling 20 können - in Form eines oder mehrerer Datensätze - in digitaler Form für eine maschinelle Weiterverarbeitung bereitgestellt werden, zum Beispiel in den Datenformaten VDA-FS, IFC, IGES, STEP, STL und DXF.

Im vorliegenden Fall werden getrennte Datensätze von Voreinstelldaten und dem kollisionsrelevanten digitalen Zwilling 20, wie auch ein gemeinsamer Datensatz umfassend beide Daten bereitgestellt.

Über die Schnittstelle 36 mit der Werkzeugmaschine 26 können die Daten bzw. die Datensätze an die Werkzeugmaschine 26 übertragen/-mittelt werden (, wo mittels der Daten die simulierte Kollisionsprüfung durchführbar ist bzw. durchgeführt wird).

Das Voreinstellgerät 2 weist ferner, wie FIG 2 zeigt, das Anzeigemittel 38 in Form eines Monitors 38 und das Eingabemittel 40 auf, welches als Tastatur 40 ausgebildet ist. Alternativ kann das Eingabemittel 40 auch als Touchscreen funktionaler Monitor 38 ausgebildet sein.

Über die Tastatur 40 kann ein Bediener die Berechnungs- und Betriebsprogramme bedienen, wobei Funktionalitäten, Daten und Statusanzeigen der Berechnungs- und Betriebsprogramme am Monitor 38 angezeigt werden, - und eine Weitergabe der Daten bzw. der Datensätze an die Werkzeugmaschine 26 - über die Schnittstelle 36 - auslösen.

Wie FIG 2 auch zeigt, ist das Komplettwerkzeug 6 auf einer Spindel 42 angeordnet, welche - manuell von einem Bediener 44 als auch von einem nicht näher dargestellten Aktuator antreibbar - um eine Rotationsachse 46 drehbar gelagert ist. Der Aktuator ist manuell vom Bediener 44 - und auch von der Rechen- und Steuereinheit automatisiert ansteuerbar.

Die erwähnte Kameravorrichtung 10 des Voreinstellgeräts 2 ist als ein Durchlichtsystem ausgebildet. Dabei liegen eine Kamera 48 und ein Beleuchtungsmittel 50 auf gegenüberliegenden Seiten eines auf der Spindel 42 angeordneten Komplettwerkzeugs 6. Die Kameravorrichtung 10 ist auf einem Schlitten 52 montiert - und ist entlang zweier Achsen verfahrbar.

Des Weiteren steht eine Schnittstelle für einen Drucker 54 zur Verfügung.

FIGen 3 bis 5 und FIGen 6 bis 8 verdeutlichen - für unterschiedliche Arten von Werkzeugen 4, einmal ein nicht rotierendes Werkzeug 4 und einmal ein rotierendes Werkzeug 4, jeweils die Generierung der Daten für den kollisionsrelevanten digitalen Zwilling 20, kurz die Erstellung des kollisionsrelevanten digitalen Zwillings 20 - mittels welchem dann die simulierte Kollisionsprüfung durchgeführt wird (vgl. FIG 9, Darstellung eines kollisionsrelevanten digitalen Zwillings 20) .

### Erstellung eines kollisionsrelevanten digitalen Zwillings 20 bei einem nicht rotierenden Werkzeug 4 (FIGen 3 bis 5)

Bei der Generierung des kollisionsrelevanten digitalen Zwillings 20 eines Komplettwerkzeugs 6 - hier für ein nicht rotierendes Werkzeug 4, wie beispielsweise ein Drehwerkzeug 4, - wird dieses abgetastet 100 - und dadurch ein (zweidimensionales) digitales Abbild 18 des Komplettwerkzeugs erstellt.

Die Abtastung 100 erfolgt - in diesem Fall mit nicht rotierendem Werkzeug 4 - durch einen - durch die Kameravorrichtung 10 durchgeführten - 2D Scan des Komplettwerkzeugs 6, wobei eine beidseitige Kontur 28 des Komplettwerkzeugs 6 - in einer vorgegebenen festen Position des Komplettwerkzeugs 6 (feststehende Spindel 42) vermessen wird.

Die Kameravorrichtung 10 fährt dabei automatisiert verschiedene Höhen des Komplettwerkzeugs 6 an und führt in diesen Höhen jeweils eine Aufnahme des Komplettwerkzeugs 6 bzw. eines Ausschnitts 56 des Komplettwerkzeugs 6 durch, aus welchen Aufnahmen dann die Kontur 28 bzw. der Konturverlauf 28 des Komplettwerkzeugs 6 "extrahiert" wird, welcher dann das (zweidimensionale) digitale Abbild 18 bildet.

Dieses geschieht in der Form, dass die Kameravorrichtung 10 schrittweise zunächst von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur 28 der einen Seite des Komplettwerkzeugs 6 fokussiert wird - und hierbei die Kontur 28 der einen Seite des Komplettwerkzeugs 6 ermittelbar ist.

Anschließend verfährt die Kameravorrichtung 10 schrittweise von oben nach unten, wobei hier die Kameravorrichtung 10 auf die Kontur 28 der anderen Seite des Komplettwerkzeugs 6 fokussiert wird - und hierbei die Kontur 28 der anderen Seite des Komplettwerkzeugs 6 ermittelbar ist.

Zusätzlich zur Abtastung 100 des Komplettwerkzeugs wird weiter dann ein erster Schneidenpunkt 12, ein Schneidenanfangspunkt 12, und ein zweiter Schneidenpunkt 14, ein Schneidenendpunkt 14, bei dem Werkzeug 4 bzw. dem Komplettwerkzeug 6 mittels der Kameravorrichtung 10 vermessen 102, 104.

Hierzu verfährt ein Bediener 44 die Kameravorrichtung 10 in die beiden entsprechenden Höhen, welche er jeweils über eine Anzeige 58 auf dem Monitor 38 kontrollieren kann, fokussiert dort den Schneidenanfangspunkt 12 bzw. Schneidenendpunkt 14 - und kann dann mittels der Tastatur 40 die jeweilige Vermessung 102, 104 auslösen.

In dem digitalen Abbild 18 wird dann unter Verwendung des vermessenen ersten und des vermessenen zweiten Schneidenpunktes 12, 14 bzw. unter Verwendung dieser ermittelter nächstliegender Punkte 22, 24 im digitalen Abbild 18 ein Schneidenbereich 16 ermittelt 106 ("kollisionsrelevanter digitaler Zwilling" 20).

### Erstellung eines kollisionsrelevanten digitalen Zwillings 20 bei einem rotierenden Werkzeug 4 (FIGen 6 bis 8)

Bei der Generierung des kollisionsrelevanten digitalen Zwillings 20 eines Komplettwerkzeugs 6 - hier für ein rotierendes Werkzeug 4, wie beispielsweise ein Fräswerkzeug 4, - wird dieses ebenfalls abgetastet 100 - und - in diesem Fall eines rotierenden Werkzeugs 4- ein (dreidimensionales) digitales Abbild 18 des Komplettwerkzeugs 6 erstellt.

Die Abtastung 100 erfolgt - in diesem Fall mit rotierendem Werkzeug 4 - durch einen - durch die Kameravorrichtung 10 durchgeführten - 3D Scan des Komplettwerkzeugs 6, wobei eine einseitige Kontur 28 des Komplettwerkzeugs - bei unterschiedlich gedrehtem Komplettwerkzeug 6 (rotierende Spindel 42) vermessen wird.

Die Kameravorrichtung 10 fährt dabei automatisiert verschiedene Höhen des Komplettwerkzeugs 6 an - und führt in diesen Höhen jeweils Aufnahmen des Komplettwerkzeugs 6 bzw. von einem Ausschnitt 56 des Komplettwerkzeugs 6 in unterschiedlich (mittels der Spindel 42) gedrehten KomplettwerkzeugPositionen durch, aus welchen Aufnahmen dann die Hüllkontur 30 des Komplettwerkzeugs 6 "extrahiert" wird, welche dann das dreidimensionale digitale Abbild 18 bildet.

Dieses geschieht in der Form, dass die Kameravorrichtung 10 schrittweise von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur 28 einer Seite des Komplettwerkzeugs 6 fokussiert wird. In den angefahrenen Höhen werden jeweils verschiedene Aufnahmen des Komplettwerkzeugs 6 gemacht - in jeweils unterschiedlich gedrehten Komplettwerkzeugpositionen. Zusätzlich zur Abtastung 100 des Komplettwerkzeugs 6 wird weiter dann ein erster Schneidenpunkt 12, ein Schneidenanfangspunkt 12, und ein zweiter Schneidenpunkt 14, ein Schneidenendpunkt 14, bei dem Werkzeug 6 bzw. dem Komplettwerkzeug 6 mittels der Kameravorrichtung 10 vermessen 102, 104.

Hierzu verfährt ein Bediener 44 die Kameravorrichtung 10 in die beiden entsprechenden Höhen, welche er jeweils über eine Anzeige 58 auf dem Monitor 38 kontrollieren kann, fokussiert dort den Schneidenanfangspunkt 12 bzw. Schneidenendpunkt 14 - und kann dann mittels der Tastatur 40 die jeweilige Vermessung 102, 104 auslösen.

In dem digitalen Abbild 18 wird dann unter Verwendung des vermessenen ersten und des vermessenen zweiten Schneidenpunktes 12, 14 bzw. unter Verwendung dieser ermittelter nächstliegender Punkte 22, 24 im digitalen Abbild 18 ein Schneidenbereich 16 ermittelt 106 ("kollisionsrelevanter digitaler Zwilling" 20).

### Kollisionsrelevanter digitaler Zwilling 20 (FIG 9)

FIG 9 zeigt einen kollisionsrelevanten digitalen Zwilling 20 eines Komplettwerkzeugs 6 - dargestellt aus von dem Voreinstellgerät 2 generierten step-Daten (vgl. Kap. "Erstellung eines kollisionsrelevanten digitalen Zwillings 20 bei einem rotierenden Werkzeug 4 (FIGen 6 bis 8)").

FIG 9 zeigt so das digitale Abbild 18 (3D Modell) einer Werkzeugaufnahme 8 mit eingespanntem Werkzeug 4 - hier einen Ähnlichen, wie das (Hydrodehn-)Spannfutter 8 mit eingespanntem Fräswerkzeug 4 aus FIG 1, in welchem der erfindungsgemäße Schneidenbereich 16 des Werkzeugs bestimmt 106 (und - der Anschaulichkeit halber - farblich markiert) ist.

Auf Basis dieser Daten führt die Werkzeugmaschine 26 und/oder ein externer Programmierplatz dann die Kollisionssimulation durch.

### "Gestitchtes" Abbild eines Werkzeugs 4 (FIGen 10a und b)

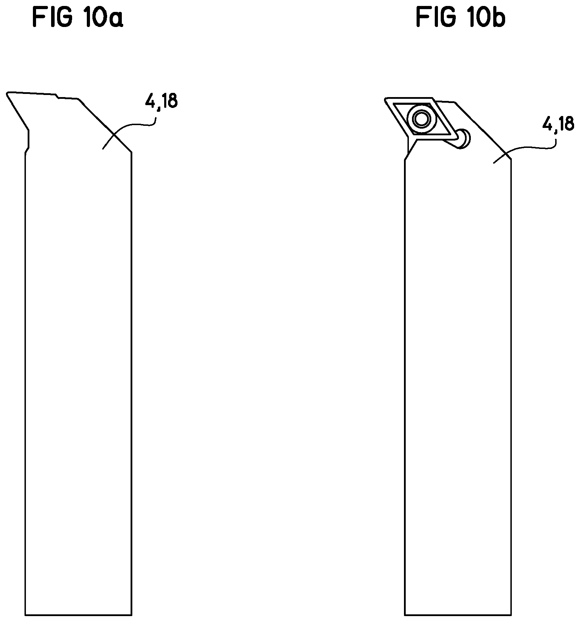

FIG 10a und b zeigen ein im Durchlichtverfahren bzw. ein im Auflichtverfahren gestitchtes Abbild 18 eines Werkzeugs 4.

In diesem Abbild kann dann unter Verwendung zumindest des ersten Schneidenpunktes 12 bzw. des ersten und des zweiten Schneidenpunktes 12, 14 ein Schneidenbereich 16 ermittelt werden - und so der "kollisionsrelevante" bzw. "zerspanungsrelevante digitale Zwilling" 20 generiert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Vorrichtung zum Vermessen eines Werkzeugs oder eines Komplettwerkzeugs, Voreinstellgerät
- 4: (rotierendes/nicht rotierendes) Werkzeug, Drehwerkzeug, Fräswerkzeug
- 6: Komplettwerkzeug
- 8: Werkzeugaufnahme, (Hydrodehn-)Spannfutter
- 10: Vermessungseinheit, (optische) Messeinrichtung, Kameraeinheit

- 12: erster Schneidenpunkt, Schneidenanfangspunkt
- 14: zweiter Schneidenpunkt, Schneidenendpunkt
- 16: Schneidenbereich
- 18: digitales Abbild
- 20: kollisionsrelevanter digitaler Zwilling

- 22: ein dem ersten Schneidenpunkt nächstliegender Punkt im digitalen Abbild
- 24: ein dem zweiten Schneidenpunkt nächstliegender Punkt im digitalen Abbild
- 26: Werkzeugmaschine, CNC-Werkzeugmaschine, CNC-Bearbeitungsmaschine
- 28: Kontur, Konturverlauf
- 30: Hüllkontur

- 32: Werkstück
- 34: Rechen- und Steuereinheit
- 36: Schnittstelle mit der Werkzeugmaschine
- 38: Anzeigemittel, Monitor
- 40: Eingabemittel, Tastatur

- 42: Spindel
- 44: Bediener
- 46: Rotationsachse
- 48: Kamera
- 50: Beleuchtungsmittel

- 52: Schlitten
- 54: Drucker
- 56: Ausschnitt
- 58: Anzeige

- 100: Abtasten
- 102: Vermessen des ersten Schneidenpunktes bzw. des Schneidenanfangspunkts
- 104: Vermessen des zweiten Schneidenpunktes bzw. des Schneidenendpunkts
- 106: Ermittlung eines Schneidenbereichs

## Patentansprüche

1. **Vorrichtung** zum Vermessen eines Werkzeugs oder eines Komplettwerkzeugs aus einer Werkzeugaufnahme und einem in der Werkzeugaufnahme eingespannten Werkzeug
**dadurch gekennzeichnet, dass**
eine Vermessungseinheit und Rechen- und Steuereinheit derart eingerichtet sind, dass
für die Erstellung eines digitalen Abbildes des Werkzeugs oder des Komplettwerkzeugs das Werkzeug oder das Komplettwerkzeug abgetastet wird, zusätzlich zur Abtastung des Werkzeugs oder des Komplettwerkzeugs zumindest ein erster Schneidenpunkt, insbesondere der erste Schneidenpunkt, beispielsweise ein Schneidenanfangspunkt, und ein zweiter Schneidenpunkt, beispielsweise ein Schneidenendpunkt, bei dem Werkzeug oder dem Komplettwerkzeug vermessen wird, und in dem digitalen Abbild unter Verwendung zumindest des ersten Schneidenpunktes, insbesondere des ersten und des zweiten Schneidenpunktes, ein Schneidenbereich ermittelt wird ("kollisionsrelevantes digitaler Zwilling"),
insbesondere das die Vermessungseinheit derart eingerichtet ist zur Durchführung eines Verfahrens nach einem der nachfolgenden Verfahrensansprüche.

2. **Vorrichtung** zum Vermessen eines Werkzeugs oder eines Komplettwerkzeugs aus einer Werkzeugaufnahme und einem in der Werkzeugaufnahme eingespannten Werkzeug,
**dadurch gekennzeichnet, dass**
die Vermessungseinheit und Rechen- und Steuereinheit weiter derart eingerichtet sind, dass
unter Verwendung des digitalen Abbildes bzw. des kollisionsrelevanten digitalen Zwillings ein zerspanungsrelevanter Zwilling erstellbar ist, welcher neben den dem kollisionsrelevanten Zwilling zugewiesenen Informationen weitere Informationen und/oder diese ursprünglichen Informationen in besonderer Struktur bzw. Verarbeitung aufweist.

3. **(Werkzeug-)Voreinstellgerät**
mit
einer **Vorrichtung** zum Vermessen eines Werkzeugs oder eines Komplettwerkzeugs aus einer Werkzeugaufnahme und einem in der Werkzeugaufnahme eingespannten Werkzeug nach einem der voranstehenden Vorrichtungsansprüche.

4. **Bearbeitungszentrum**
mit
einer **Vorrichtung** zum Vermessen eines Werkzeugs oder eines Komplettwerkzeugs aus einer Werkzeugaufnahme und einem in der Werkzeugaufnahme eingespannten Werkzeug nach einem der voranstehenden Vorrichtungsansprüche, insbesondere einem **(Werkzeug-)Voreinstellgerät** nach dem Anspruch 3, und einer Werkzeugmaschine, wobei insbesondere die **Vorrichtung** und die Werkzeugmaschine auf einem gemeinsamen Sockel montiert sind und/oder die **Vorrichtung** in die Werkzeugmaschine integriert ist.

5. **Verfahren** zum Erstellen eines digitalen Abbilds eines Werkzeugs oder Komplettwerkzeugs aus einer Werkzeugaufnahme und einem in der Werkzeugaufnahme eingespannten Werkzeug, insbesondere mittels einer Vorrichtung nach einem der voranstehenden Vorrichtungsansprüche,
**dadurch gekennzeichnet, dass**
für die Erstellung des digitalen Abbildes das Werkzeug oder das Komplettwerkzeug abgetastet wird, insbesondere unter Verwendung der Vorrichtung zum Vermessen eines Werkzeugs oder eines Komplettwerkzeugs,
zusätzlich zur Abtastung des Werkzeugs oder des Komplettwerkzeugs zumindest ein erster Schneidenpunkt, insbesondere der erste Schneidenpunkt, beispielsweise ein Schneidenanfangspunkt, und ein zweiter Schneidenpunkt, beispielsweise ein Schneidenendpunkt, bei dem Werkzeug oder dem Komplettwerkzeug vermessen wird, insbesondere unter Verwendung der Vorrichtung zum Vermessen eines Werkzeugs oder eines Komplettwerkzeugs, und
in dem digitalen Abbild unter Verwendung zumindest des ersten Schneidenpunktes, insbesondere des ersten und des zweiten Schneidenpunktes, ein Schneidenbereich ermittelt wird ("kollisionsrelevantes digitaler Zwilling").

6. **Verfahren** zum Erstellen eines digitalen Abbilds nach einem der voranstehenden Verfahrensansprüche,
**dadurch gekennzeichnet, dass**
die Abtastung des Werkzeugs oder des Komplettwerkzeugs in verschiedenen Werkzeug- bzw. Komplettwerkzeughöhen erfolgt und aus den Abtastungen das digitale Abbild ermittelt wird.

7. **Verfahren** zum Erstellen eines digitalen Abbilds nach einem der voranstehenden Verfahrensansprüche,
**dadurch gekennzeichnet, dass**
bei der Bestimmung des Schneidenbereichs unter Verwendung zumindest des ersten Schneidenpunktes, insbesondere des ersten und des zweiten Schneidenpunktes, diesem Punkt bzw. diesen Punkten ein nächstliegender Punkt bzw. nächstliegende Punkte in dem digitalen Abbild des Werkzeugs oder Komplettwerkzeugs bestimmt wird bzw. werden und der Schneidenbereich unter Verwendung dieses nächstliegenden Punktes bzw. dieser nächstliegenden Punkte ermittelt wird, insbesondere in dem digitalen Abbild markierbar ist.

8. **Verfahren** zum Erstellen eines digitalen Abbilds nach einem der voranstehenden Verfahrensansprüche,
**dadurch gekennzeichnet, dass**
bei der Abtastung ein 2D Scan des Werkzeugs oder des Komplettwerkzeugs durchgeführt wird, insbesondere unter Verwendung der Vorrichtung zum Vermessen eines Werkzeugs oder eines Komplettwerkzeugs, wobei während des 2D Scans eine beidseitige Kontur des Werkzeugs oder des Komplettwerkzeugs in einer vorgegebenen festen Position vermessen wird.

9. **Verfahren** zum Erstellen eines digitalen Abbilds nach einem der voranstehenden Verfahrensansprüche,
**dadurch gekennzeichnet, dass**
bei der Abtastung ein 3D Scan des Werkzeugs oder des Komplettwerkzeugs durchgeführt wird, insbesondere unter Verwendung der Vorrichtung zum Vermessen eines Werkzeugs oder eines Komplettwerkzeugs, wobei während des 3D Scans eine einseitige Kontur des Werkzeugs oder des Komplettwerkzeugs vermessen wird, wobei bei der Vermessung das Werkzeug oder das Komplettwerkzeug gedreht und eine Hüllkontur ermittelt wird.

10. **Verfahren** zum Erstellen eines digitalen Abbilds nach einem der voranstehenden Verfahrensansprüche,
**dadurch gekennzeichnet, dass**
bei der Abtastung dann ein 3D Scan des Werkzeugs oder des Komplettwerkzeugs durchgeführt wird, wenn das Werkzeug ein rotierendes Werkzeug ist.

11. **Verfahren** zum Erstellen eines digitalen Abbilds nach einem der voranstehenden Verfahrensansprüche,
**dadurch gekennzeichnet, dass**
für die Erstellung des digitalen Abbildes des Komplettwerkzeugs nur die Abtastung des Werkzeugs bei dem Komplettwerkzeug durchgeführt wird, wenn und wobei Daten für das digitale Abbild der Werkzeugaufnahme anderweitig vorliegen, insbesondere bereits abgespeichert sind und/oder eingelesen werden.

12. **Verfahren** zum Erstellen eines digitalen Abbilds nach einem der voranstehenden Verfahrensansprüche,
**dadurch gekennzeichnet, dass**
bei der Erstellung des digitalen Abbildes des Werkzeugs oder des Komplettwerkzeug mindestens ein Datensatz, insbesondere mehrere Datensätze, erzeugt wird bzw. werden, insbesondere ein Datensatz mit Daten des digitalen Abbildes und mit Daten für den ermittelten Schneidenbereich und/oder ein Datensatz mit Daten des digitalen Abbildes und mit Daten für den ermittelten Schneidenbereich sowie auch mit Vermessungsdaten des Werkzeugs, insbesondere aus einer Vermessung unter Verwendung der Vorrichtung zum Vermessen eines Werkzeugs oder eines Komplettwerkzeugs.

13. **Verfahren** zum Erstellen eines digitalen Abbilds nach einem der voranstehenden Verfahrensansprüche,
**dadurch gekennzeichnet, dass**
das Werkzeug oder das Komplettwerkzeug, insbesondere unter Verwendung der Vorrichtung zum Vermessen eines Werkzeugs oder eines Komplettwerkzeugs, vermessen wird.

14. **Verfahren** zum Erstellen eines digitalen Abbilds nach einem der voranstehenden Verfahrensansprüche,
**dadurch gekennzeichnet, dass**
eine Kollisionsprüfung unter Verwendung des digitalen Abbildes bzw. des kollisionsrelevanten digitalen Zwillings durchgeführt wird.

15. **Verfahren** zum Erstellen eines digitalen Abbilds nach einem der voranstehenden Verfahrensansprüche,
**dadurch gekennzeichnet, dass**
unter Verwendung des digitalen Abbildes bzw. des kollisionsrelevanten digitalen Zwillings ein zerspanungsrelevanter Zwilling erstellt wird, welcher neben den dem kollisionsrelevanten Zwilling zugewiesenen Informationen weitere Informationen und/oder diese ursprünglichen Informationen in besonderer Struktur bzw. Verarbeitung aufweist.

16. **Verfahren** zum Erstellen eines digitalen Abbilds nach einem der voranstehenden Verfahrensansprüche,
**durchgeführt**
mit einem Schneidwerkzeug und/oder mit einem in der Werkzeugaufnahme eingeschrumpften Schneidwerkzeug.
